# EUROPEAN PATENT APPLICATION

(11) **EP 4 711 080 A1**
(43) Date of publication of application: **18.03.2026**
(21) Application number: 25201046.7
(22) Date of filing: 09.09.2025
(51) Int. Cl.: B24B 9/00, B24B 9/06, B23Q 11/00

(54) **SQUARING MACHINE PROVIDED WITH SOUND-INSULATING FAIRING**

(30) Priority: 12.09.2024 IT 202400020329
(71) Applicant: BMR S.p.A., 40026 Imola (BO) (IT)
(72) Inventor: ARDUINI, Gabriele, 42019 SCANDIANO (RE) (IT)
(74) Representative: Corradini, Cesare

(57) **Abstract**

A squaring machine (10) for processing slabs (15) is described, comprising:
- a base frame (20);
- a pair of side banks (30) supported by said base frame (20) and movable in reciprocal approach/distancing along a horizontal reciprocal flanking direction (B), wherein each side bank (30) carries:
o a series of spindles (50) each having an abrasive tool (60) rotating about a respective rotation axis (R); and
o at least one conveyor (35),
wherein said conveyors (35) carried by the side banks (30) provide a movable support surface (25) adapted to receive and move at least one slab (15) or a succession of slabs (15) along a horizontal advancement direction (A) orthogonal to the flanking direction (B);
- a fairing (105) supported by the base frame (20) and delimiting a processing compartment (115) where at least some of said spindles (50) are accommodated.

## Description

### TECHNICAL FIELD

The present invention relates to the field of processing slabs, preferably but not limited to ceramic slabs, natural stone slabs, glass slabs or the like.

In particular, the present invention relates to a squaring machine for processing slabs.

### PRIOR ART

As is known slabs, such as ceramic slabs (paving or wall-covering tiles), natural stone slabs, glass slabs or the like, may require squaring operations suitable for bringing two opposite sides of the slab substantially parallel and the adjacent sides substantially squared with the first ones.

Such an operation is normally performed by squaring machines, which process a plurality of slabs advancing in a sequence on a movement surface, for instance horizontal. While advancing on the movement surface, each of the two opposite sides of the slab encounters a sequence of rotating abrasive tools, which remove the excess material from the two opposite sides so as to achieve the flatness and parallelism thereof.

Each quadrangular slab is generally processed on all four lateral sides.

For this purpose, each processing plant can generally comprise two squaring machines, which are placed in sequence after each other, of which a first squaring machine for processing two opposite sides and a second squaring machine for processing the other two opposite sides.

As is known, such squaring machines are particularly impactful from an acoustic point of view, both because of the various movements of the abrasive tools of the squaring machine and, more in general, of all of the moving parts thereof, and more importantly, precisely because of the material removal processing performed, i.e., the contact between the abrasive tools and the slab.

Because of such high noise emissions, both wet and dry squaring machines are generally placed inside specially constructed sound-absorbing installations which are made separate from the squaring machine and essentially define a booth delimiting a space for placing the squaring machine itself.

A known drawback in the sector, however, is that the large size of such installations, which must contain the entire squaring machine therein and provide further space around it for the passage of the various squaring machine operators, is an environmental constraint as well as an economic aggravation.

Furthermore, the operators are in any case obliged to wear personal hearing protection devices when they are inside said installations.

Such drawbacks inconveniences are further accentuated where the plant comprises a plurality of squaring machines, often side-by-side and operating simultaneously, inserted into a single sound-insulating installation which therefore has a very large footprint and where, in fact, one or more operators are substantially constantly present for carrying out the normal maintenance tasks, who are thus exposed to noise pollution on an almost continuous basis.

An aim of the present invention is to solve one or more of the aforesaid drawbacks. Another aim of the present invention is to achieve such an objective within the scope of a simple, rational and effective solution.

Such aims are achieved by the features of the invention set forth in the independent claim. The dependent claims outline preferred and/or particularly advantageous aspects of the invention.

### DISCLOSURE OF THE INVENTION

The invention, in particular, provides a squaring machine for processing slabs, comprising:
- a base frame;
- a pair of side banks supported by said base frame and movable in mutual approach/distancing along a mutual horizontal flanking direction, wherein each side bank carries:
   ∘ a series of spindles each having an abrasive tool rotating about a respective rotation axis; and
   ∘ at least one conveyor,
   wherein said conveyors carried by the side banks make available a movable resting surface adapted to receive and move at least one slab or a succession of slabs along a horizontal (or substantially horizontal) advancement direction orthogonal to the flanking direction;
- a fairing (e.g., in particular a sound-insulating fairing) supported by the base frame and delimiting a processing compartment, where at least some of said spindles (i.e., at least one portion of some of said spindles, e.g., a main portion of each of said spindles) is accommodated so as to attenuate and/or absorb the sound waves developing from a spindle-slab contact and/or limit the transmission outside the fairing, i.e., into the environment surrounding the squaring machine, of the noise produced by the squaring machine and in particular by the spindle-slab contact.

Thanks to such a solution, the invention provides a squaring machine which does not require external sound-insulating structures for installation and noise abatement. Thanks to the presence of such a fairing, which at least partially covers the spindles, it is possible to reduce the acoustic impact of the squaring machine, limiting the transmission of the noise produced by the slab processing.

Such a fairing defines said processing compartment at least partially (e.g., only partially) circumscribed (but still remaining open near the resting surface to allow the slab to advance along the advancement direction so that it is gradually intercepted by the spindles of the series), and thus makes an acoustic barrier between the inside and outside of said processing compartment, thereby limiting the transmission of noise from the inside of the processing compartment to the outside.

A further aspect of the invention provides that such a fairing can have a body, delimiting said processing compartment, having a thickness (understood as a dimension along a direction which goes from outside the processing compartment to inside the processing compartment, substantially perpendicular to the body, i.e., to a wall thereof) of at least 4 cm, e.g., at least 5 cm, e.g., preferably at least 6 cm, even more preferably at least 8 cm. For example, the fairing body can preferably have a thickness between 4 and 10 cm, e.g., preferably between 7 and 10 cm.

Thanks to such a solution, the thickness of the fairing is optimal in order to effectively limit the acoustic impact of the squaring machine and to minimise the amount of material for making, and therefore cost and weight, the fairing body.

A further aspect of the invention envisages that said fairing can be provided with a body at least partially made of a sound-insulating material (i.e., acoustically insulating, and possibly also sound-absorbing, so as to attenuate and/or absorb sound waves developing from a spindle-slab contact and/or limit the transmission outside the fairing, i.e., into the environment surrounding the squaring machine, of the noise produced by the squaring machine and in particular by the spindle-slab contact).

Thanks to such a solution, the invention practically makes available a squaring machine with an integrated sound-insulating fairing, which allows to both speed up and economise the installation of the squaring machine, obviating all the planning steps of making sound-insulating installations to accommodate the squaring machine and which are separate therefrom, while minimising the space required to have a sound-insulated operating squaring machine.

Sound-insulating material can be understood, in particular, as a material with a density of at least 4kg/m³.

Another aspect of the invention envisages that the sound-insulating material of the fairing can have a density greater than 20 kg/m³, e.g., preferably between 20 kg/m³ and 250 kg/m³, e.g., preferably between 20 kg/m³ and 85 kg/m³.

Thanks to such a solution, said sound-insulating material is optimal from a weight/insulating power balance point of view.

Another aspect of the invention envisages that the sound-insulating fairing body can comprise:
- a support structure (rigid, i.e., not deformable when subjected to the usual loads for which it is intended, e.g., substantially in the form of a shell),
- at least one coating layer made of (said) sound-insulating (i.e., acoustically insulating, possibly also sound-absorbing) material covering (at least partially) the support structure (i.e., covers at least partially, preferably at least a main portion or even entirely, at least one surface of the support structure facing the processing compartment).

Said coating layer can cover, in direct contact or otherwise, the support structure preferably inside the processing compartment, i.e., it can cover (partially or wholly, in direct contact or otherwise) preferably at least one surface of the support structure facing the processing compartment.

However, it is not excluded that such a coating can be adapted to cover both a surface of the support structure facing the processing compartment and an (opposite) surface of the support structure facing the opposite side with respect to the processing compartment (i.e., facing outside the processing compartment).

Such a coating layer has a surface turned towards and at least partially facing the processing compartment.

Thanks to such a solution, the sound-insulating fairing body has a solid and durable structure.

A further aspect of the invention envisages that the body of the fairing (i.e., of said sound-insulating fairing) can further comprise at least one further coating layer made of a yielding (i.e., at least partially elastically deformable) anti-vibration (i.e., vibration-damping) material, possibly also sound-insulating, which covers the support structure.

Said further coating layer can cover, in direct contact or otherwise (e.g., in direct contact), the support structure preferably inside the processing compartment, i.e., it can cover (partially or wholly, in direct contact or otherwise, e.g., in direct contact) preferably at least one surface of the support structure facing the processing compartment.

Thanks to such a solution, the fairing not only acts as a sound-insulator, but also absorbs the vibrations due to the various motions of the machine's moving parts and the material removal processing carried out by the machine, making the squaring machine even less impactful.

Thanks to a single structure, i.e., the sound-insulating fairing, it is therefore possible to both reduce the acoustic impact and reduce the vibration impact of the squaring machine. A further aspect of the invention envisages that the further coating layer, i.e., the one made of yielding anti-vibration material, can be interposed between the support structure and the coating layer, i.e., the one made of sound-insulating material (i.e., acoustic insulation).

Thanks to such a solution, the arrangement of the coating layer and the further coating layer is particularly rational and effective in terms of reducing the acoustic impact of the squaring machine while also dampening the vibrations thereof.

Still a further aspect of the invention envisages that said coating layer (in sound-insulating material, i.e., acoustic insulation) can be made of, i.e., that said sound-insulating material (i.e., acoustic insulation), can be polyurethane foam (optionally expanded polyurethane foam).

Preferably, said coating layer of sound-insulating (i.e., acoustically insulating) material can have a thickness between 60 and 120 mm, e.g., preferably between 70 mm and 100 mm, even more preferably substantially between 78 mm and 85 mm, e.g., substantially 80 mm.

In particular, the thickness of the coating layer of sound-insulating material (i.e., acoustic insulation) can define most of the thickness of the body of the sound-insulating booth.

A further aspect of the invention envisages that said further coating layer (of yielding anti-vibration material, optionally also sound-insulating) can be made of, or that said yielding anti-vibration material can be, high-density polymeric material, for example in the material known under the trade name TECNODAMP, or alternatively laminated to another density comprising a mixture of oxidised bitumen, plasticisers, elastomers and optionally fillers of variable particle size.

Preferably, said further coating layer, made of a yielding anti-vibration material, can have a thickness between 1 and 10 mm, e.g., preferably between 3 mm and 8 mm, e.g., substantially 5 mm.

Still another aspect of the invention envisages that the body of the (sound-insulating) fairing can further comprise a perforated sheet metal layer (i.e., for example, a sheet metal having a mesh structure or alternatively a sheet metal provided with a plurality of through holes distributed, e.g., preferably uniformly, along the development of the sheet metal) superimposed on the coating layer of sound-insulating material (i.e., superimposed on a surface of the coating layer facing the processing compartment, i.e., interposed between the coating layer and the processing compartment).

Thanks to such a solution, the layer of sound-insulating material (i.e., acoustic insulation) is protected by the perforated sheet metal (e.g., micro-perforated) from direct exposure to the abrasive dust that is released during the material removal processing from the slab, which could otherwise consume it rapidly.

At the same time, being perforated, the sheet metal allows the passage of sound waves and thus allows the absorbing material to perform its function of reducing the acoustic impact of the squaring machine 10.

An aspect of the invention envisages that said perforated sheet metal layer, i.e., the thickness of said perforated sheet metal, can be between 0.5 and 2 mm, e.g., it can substantially be 1 mm.

In particular, an aspect of the invention envisages that the perforated sheet metal layer can be fixed, directly (e.g., welded or screwed, preferably removably for example screwed), to the support structure so as to define therewith a casing or cage within which said sound-insulating coating layer and, where present, said further layer of yielding anti-vibration coating material are inserted (i.e., contained).

Still another aspect of the invention envisages that the fairing (i.e., said sound-insulating fairing) can comprise a door system associated with an access opening to the processing compartment made in the body of the sound-insulating fairing itself, for example a pair of door systems each of which is made at a respective side bank of the body of the sound-insulating fairing, and that said door system can be selectively actuatable in an open configuration in which it frees the access opening or in a closed configuration in which it occludes the access opening.

Thanks to such a solution, the fairing (a.k.a. the sound-insulating fairing) is provided with a door system which allows access to the processing compartment as needed.

A further aspect of the invention envisages that said door system can comprise a pair of doors which can reciprocally slide towards/away from each other (e.g., along a direction parallel to the advancement direction).

Thanks to such a solution, the footprint of the door system in both the opening and closing phase remains minimal.

Thanks to such a sliding door system, in fact, the space required to move the doors is minimised, as is the footprint required for the (sound-insulating) fairing and the squaring machine as a whole.

Another aspect of the invention is that each of said doors of the door system can preferably provide a respective portion of the body of the sound-insulating fairing.

Yet another aspect of the invention is that each door can preferably have the (stratiform) structure of the sound-insulating fairing, i.e., it can have:
- a support structure (e.g., rigid, i.e., not deformable when subjected to the usual loads for which it is intended),
- at least one coating layer made of a sound-insulating material which covers (whether in direct contact or not) the support structure (e.g., at least inside the processing compartment, or e.g. covers, in direct contact or otherwise, at least partially, preferably at least a main portion or even entirely, at least one surface of the support structure facing the processing compartment),
- optionally a further coating layer made of a yielding anti-vibration material covering the support structure, wherein preferably said further coating layer is interposed between the support structure and the coating layer,
- optionally a layer of perforated sheet metal superimposed on the coating layer (i.e., the sound-insulating coating layer).

Still a further aspect of the invention envisages that the fairing (i.e., said sound-insulating fairing) can be rigidly fixed (i.e., fixed without any residual degrees of freedom, e.g., screwed or welded or otherwise fixed, e.g., preferably removably) to the base frame. Thanks to such a solution, the sound-insulating fairing is supported directly by the base frame of the squaring machine, thus avoiding encumbering other elements of the squaring machine itself.

Another aspect of the invention envisages that the body of the fairing (i.e., of said sound-insulating fairing) can comprise two half-shells, said half-shells being selectively closable to delimit said processing compartment, each half-shell being fixed to a respective side bank and integral in movement therewith.

Thanks to such a solution, the footprint of the fairing can also vary depending on the format of the slab being processed, in particular this can be minimised if the slabs being processed are small and therefore the distance between the side banks along the flanking direction is minimised.

Still another aspect of the invention envisages that the squaring machine can comprise an electronic control unit operatively connected to the spindles of the series to selectively actuate the same in rotation about the respective rotation axes and operatively connected to the door system, and that the electronic control unit can be configured to terminate the actuation of the spindles of the series and/or generate an alarm signal if the door system passes from the closed configuration to the open configuration.

Thanks to such a solution, the squaring machine is particularly safe for the operators assigned thereto, obviating the possibility of accidents due to slight injuries.

In fact, whenever the door system moves to the open configuration, all the spindles with the respective abrasive tools are stopped so that they can avoid injuring the operator. At the same time, by stopping the spindles, the noise emission of the squaring machine is also drastically reduced, preventing the operator or other users close to the squaring machine from being harmed by the noise emissions thereof.

A further aspect of the invention envisages that one or more protective barriers can be mounted on each side bank to cover (i.e., make a barrier with respect to a direction parallel to the rotation axis of the abrasive tool) the abrasive tool of one or more of the spindles of the respective series, said protective barrier being provided with a body comprising:
- a foil of rigid material, and
- a covering layer made of sound-insulating material (i.e., acoustic insulation, possibly also sound-absorbing) covering the foil of rigid material (i.e., at least one surface thereof facing the resting surface).

Thanks to such a solution, the acoustic impact of the squaring machine is further minimised.

In fact, such a protective barrier, which is located right next to the abrasive tool in processing, thanks to its sound-insulating (i.e., acoustic insulation) structure right next to the source of greatest noise, is able to effectively attenuate the acoustic impact generated by the squaring machine.

Still a further aspect of the invention envisages that the body of each protective barrier can further envisage a second covering layer, made of a yielding, anti-vibration material, preferably interposed between the foil of rigid material and the covering layer (made of sound-insulating (i.e., acoustic insulation) material).

Thanks to such a solution, the protective barrier also makes it possible to absorb (at least partially) the vibrations caused by the material removal processing carried out by the same, making the squaring machine even less impactful, precisely next to the source, making the dampening effect particularly effective.

Thanks to such a solution, it is therefore possible to further reduce also the impact in terms of vibrations of the squaring machine.

A further aspect of the invention envisages that the body of each protective barrier can further provide a layer of (i.e., defined by a) perforated sheet metal i.e., for example a sheet metal having a mesh structure or alternatively a sheet metal provided with a plurality of through holes distributed, e.g., preferably uniformly, along the development of the sheet metal) superimposed on the covering layer (of sound-insulating (i.e., acoustic insulation) material, i.e., superimposed on a surface of the covering layer facing the resting surface). Thanks to such a solution, the coating layer of sound-insulating material (i.e., acoustic insulation) is protected by the perforated sheet metal (e.g., micro-perforated) from direct exposure to the abrasive dust that is released during the material removal processing from the slab, which could otherwise consume it rapidly.

At the same time, being perforated, the sheet metal allows the passage of sound waves and thus allows the absorbing material to perform its function of reducing the acoustic impact of the squaring machine.

A further aspect of the invention envisages that the squaring machine can comprise a pair of fairings each of which defines a respective processing compartment within which the spindles of a respective series of spindles are accommodated.

Thanks to such a solution, the squaring machine is acoustically insulated while keeping the overall footprint of the fairings to a minimum with respect to the overall footprint of the machine.

Yet another aspect of the invention envisages that each of said fairings of the pair can be fixed to a respective side bank and integral in movement therewith along the flanking direction.

### BRIEF DESCRIPTION OF THE DRAWINGS

Further features and advantages of the invention will be more apparent after reading the following description provided by way of a non-limiting example, with the aid of the figures illustrated in the accompanying drawings.
Figure 1 is a perspective view of a squaring machine according to the invention provided with a sound-insulating fairing.
Figure 2 is a front view from above of the squaring machine of Figure 1.
Figure 3 is an anterior front view of the squaring machine of Figure 1.
Figure 4 is a perspective view of an alternative embodiment of a squaring machine according to the invention provided with a sound-insulating fairing whose body is made of two half-shells.
Figure 5 is a front view from above of the squaring machine of Figure 4.
Figure 6 is an anterior front view of the squaring machine of Figure 4.
Figure 7 is a posterior front view of the squaring machine of Figure 4.
Figure 8 is a sectional view along the line VIII-VIII of Figure 5.
Figure 9 is a side front view of the squaring machine of Figure 4.
Figure 10 is a sectional view along the line X-X of Figure 9.
Figure 11 is an enlarged view of a portion of Figure 10.
Figure 12 is a perspective view of a further embodiment of a squaring machine according to the invention provided with two sound-insulating fairings.
Figure 13 is an anterior front view of the squaring machine of Figure 12.
Figure 14 is a perspective view of a base frame and two banks supported by the same of a squaring machine according to the invention.
Figure 15 is a partial schematic sectional view of a body of a protective barrier of the squaring machine.
Figure 16 is a partial schematic sectional view of a body of the sound-insulating fairing of the squaring machine according to the invention.

### DETAILED DESCRIPTION

With particular reference to such figures, a squaring machine 10 has been indicated overall to process slabs 15 such as, for example, ceramic slabs made of marble or stoneware (e.g., single-fired or double-fired porcelain stoneware) or granite or other natural stone, or further slabs 15 made of glass or similar or wood or other material which can be made into slabs which can be subjected to grinding operations.

Each slab 15 can substantially have a shape of a parallelepiped with a reduced height (thickness) and a substantially quadrangular base (in plan), for example rectangular or square, i.e., it can have two opposite major surfaces of which a lower surface (generally for laying) and an upper or visible surface, and four connecting sides between the upper surface and the lower surface of which two first sides are opposite and substantially parallel and two second sides adjacent to the first sides and opposite each other and substantially parallel.

The purpose of such a squaring operation is to bring two opposite sides of the slab, e.g., the first sides or the second sides, substantially parallel.

The squaring machine 10 comprises a base frame 20 which supports a movable resting surface 25, preferably substantially horizontal, adapted to 3 receive at least one slab 15 (for example a succession of slabs 15) and to advance it (in an advancement sense) along an advancement direction A (for example horizontal or substantially horizontal). Such a base frame 20 can comprise a floor, e.g., solid or framed, provided with common ground resting means, e.g., a plurality of (vertical) ground support legs fixed to the surface below the floor.

Alternatively, for example as illustrated in the accompanying figures, such a base frame 20 can comprise, a plurality of bridge supports G, preferably all homologous in shape and dimensions, which are preferably aligned with respect to the advancement direction A, and furthermore arranged at a non-zero distance from one another along the advancement direction A itself.

Each bridge support G is rigid, i.e., non-deformable when subjected to the usual loads for which it is envisaged, for example metallic.

Each bridge support G can comprise a pair of opposite and parallel uprights, vertical or substantially vertical, each of which has a lower end resting on the ground and an opposite upper end.

Each bridge support can then comprise a (horizontal or substantially horizontal) crossbar for connecting the uprights, which develops longitudinally orthogonally thereto, i.e., substantially horizontally and also orthogonally to the advancement direction A, fixed to the uprights at the upper ends thereof (for example above the uprights).

Each bridge support G can also comprise at least one reinforcing crossbar for connection between the uprights, which (is parallel to the crossbar, i.e.) develops longitudinally orthogonally to the uprights, i.e., substantially horizontally and also orthogonally to the advancement direction A.

Said reinforcing crossbar is fixed to the uprights at or in any case near the lower end thereof, i.e., it is fixed to each of said uprights at a distance from the lower end thereof greater than the distance between said reinforcing crossbar and the upper end of the upright.

For example, the base frame 20 can comprise only two bridge supports G each arranged at one end of the squaring machine 10 with respect to the development thereof along the advancement direction A, or alternatively (at least) three bridge supports, for example only three bridge supports, aligned with one another and at reciprocal non-zero distance along the advancement direction A, of which said two end bridge supports, and a central (intermediate) bridge support, which is preferably equidistant from the two end bridge supports, or is preferably placed at a vertical median plane of the squaring machine 10 orthogonal to the advancement direction A.

The squaring machine 10 then comprises a pair of reciprocally parallel side banks 30, which develop longitudinally along the advancement direction A, and which are supported by the base frame 20.

The side banks 30 are, in particular, slidingly associated with the base frame 20, i.e., slidingly associated with the crossbars of the bridge supports G or, for example, slidingly associated with the platform of the base frame 20 above the same, in a movable manner reciprocally towards and away along a reciprocal flanking direction B orthogonal to the longitudinal axis of the side banks 30 themselves, i.e., with respect to a horizontal or substantially horizontal flanking direction B (and parallel to the resting surface 25) and orthogonal to the advancement direction A.

The squaring machine 10 can comprise a translation unit of the side banks 30 (itself known and not described in detail), configured to selectively move them away from or towards each other along said flanking direction B.

Merely by way of example, said translation unit can comprise a motor which is connected to and selectively actuates in reciprocal movement towards or away, along said flanking direction B, two carriages (movably) associated with the base frame (e.g., to the crossbar of one of said bridge supports G, and movable along a guide developing along said flanking direction B), each carriage of which is fixed to a respective side bank to move the same along the flanking direction B.

As mentioned above, however, the translation unit is generally known and, in any case, can be conformed in any manner as long as it is suitable for the purpose of selectively moving the side banks 30 towards or away from each other along the flanking direction B.

The variation of the centre distance of the side banks 30 defines (i.e., entails) the variation of the width of the resting surface 25 defined according to the format of the slabs 15.

Furthermore, the centre distance of the side banks 30 (i.e., the distance therebetween with respect to the flanking direction B) can be adjusted, from time to time as a function of the dimensions of the slabs 15, in particular the distance between the first sides (or alternatively the second sides ) thereof, so that the first sides (or alternatively the second sides ) of the slabs 15 protrude laterally, along a direction parallel to the flanking direction B, with respect to the resting surface 25, i.e., substantially cantilevered therefrom.

In other words, the centre distance of (i.e., between) the side banks 30 can be adjusted from time to time so that the opposite sides of the slab 15 parallel to the advancement direction A are misaligned (with respect to a plan view) from the resting surface 25.

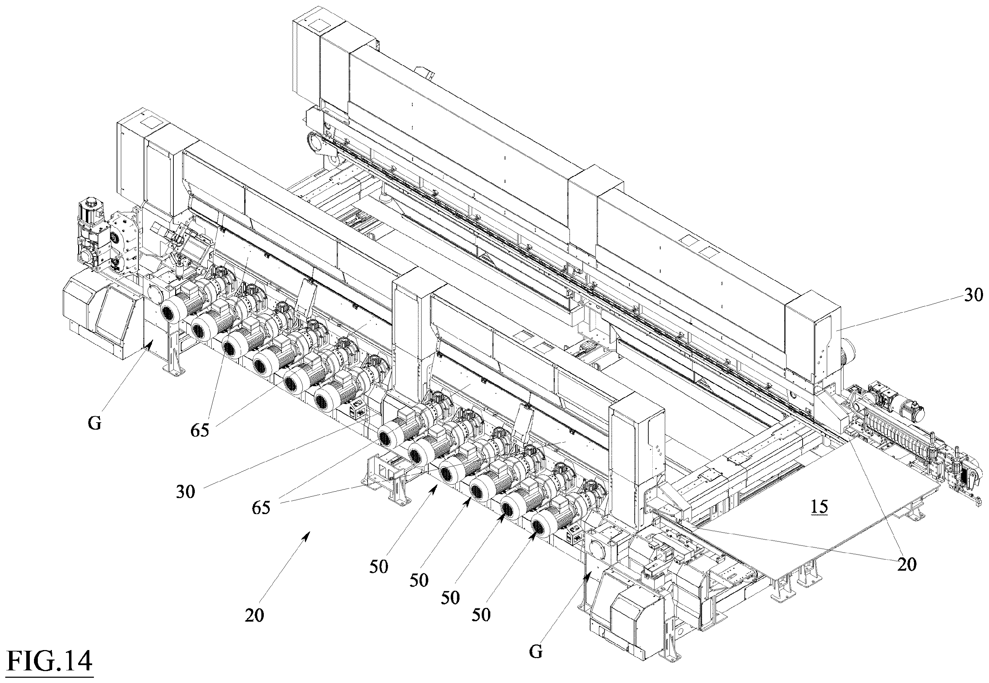

An example of a base frame 20 with the side banks 30 mounted sliding thereon is best seen in Figure 14.

As mentioned above, the base frame 20 supports a movement unit for the movement of the slabs 15 that provides said resting surface 25 movable along the advancement direction A.

In particular, the movement unit is configured to move each slab 15 so that it lies (e.g., with the bottom surface resting) on said support surface 25, e.g., substantially horizontal, and advances along the advancement direction A, with the first sides (or alternatively the second sides ) to be ground parallel to the advancement direction A.

For example, the movement unit can comprise a pair of conveyors 35, in particular of the belt or tape type, each of which is supported on (i.e., mounted on) a respective side bank 30.

Said conveyors 35, as will better appear below, provide said movable resting surface 25 adapted to receive and move the slab 15 or the sequence of slabs 15.

For example, each conveyor 35 can be of the belt or tape type.

However, it is not excluded that in alternative embodiments it could be of a different type as long as it is suitable for the purpose.

For example, each conveyor 35 can comprise a lower flexible member 40, in particular a belt or tape, which has an upper branch parallel to the advancement direction A and defines a respective portion of the movable resting surface 25 for the slabs 15.

The lower flexible members 40 of the pair of conveyors 35, i.e., the respective upper branches, are substantially coplanar and, together, define (i.e., provide) said resting surface 25.

For example, each lower flexible member 40 comprises said belt (or tape) closed on itself into a ring and wound on at least one driving pulley, driven in rotation by a respective electric motor, and at least one driven pulley (in the example a plurality of driven pulleys). Each (belt or tape) conveyor 35 can then comprise an upper flexible member 45, which has a lower branch parallel to the advancement direction A and defines a movable contact and pressure portion with the slabs 15.

Each upper flexible member 45 is superimposed, e.g., at least partially (or entirely) superimposed in plan and preferably vertically aligned, with the lower flexible member 40 of the respective conveyor 35.

For example, each upper flexible member 45 can be associated with the respective side bank 30 in a height-adjustable manner (i.e., with respect to a direction orthogonal to the resting surface 25), in order to vary the distance (i.e., the size of the gap) between the lower flexible member 40 and the upper flexible member 45, in particular between the upper branch of the lower flexible member 40 and the lower branch of the upper flexible member 45, as a function of the thickness of the slabs 15.

The upper flexible members 45 of the pair of conveyors 35, i.e., the respective lower branches, are substantially coplanar and, together, define a contact and pressure surface (e.g., horizontal or substantially horizontal) adapted to contact and press on the major surface (e.g., the upper or visible surface) of the slabs 15 opposite that resting on the resting surface 25 (e.g., the lower or laying surface).

For example, each upper flexible member 45 can in turn comprise a belt (or tape) closed on itself into a ring and wound on at least one driving pulley, driven in rotation by a respective motor (e.g., the same motor which drives the lower flexible member 40 of the conveyor 35), and at least one driven pulley (in the example a plurality of driven pulleys). The electric motors of both conveyors 35 are driven synchronously (i.e., at the same speed and in the same direction) to advance the slab 15 or the sequence of slabs 15 along the advancement direction A with the first sides (or alternatively the second sides ) parallel to the advancement direction A itself.

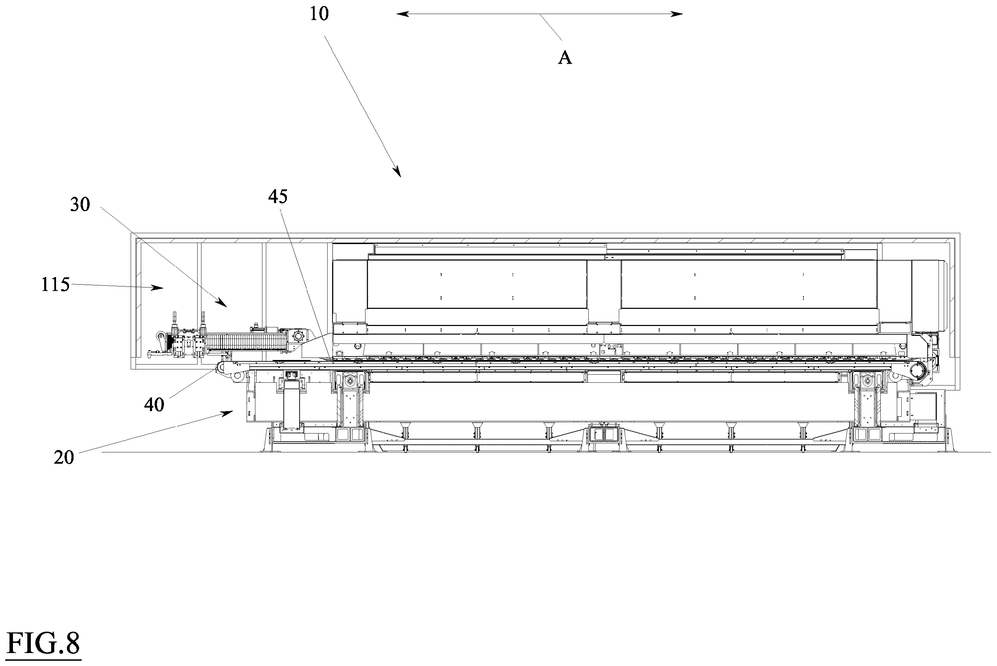

As can best be guessed from the section of Figure 8, the lower flexible members 40 can preferably have a greater length than the respective upper flexible members 45, i.e., the lower branches thereof, so that one end of the lower flexible members 40, in detail the end upstream with respect to the advancement direction of the slabs 15 along the advancement direction A, is offset with respect to the respective upper flexible member 45 (i.e., misaligned in plan view with respect thereto).

In practice, said offset end of the lower flexible members 40 provides an inlet section on which the slab 15 rests before it wedges between the lower flexible members 40 and the upper flexible members 45, i.e., before it wedges between the resting surface 25 and said contact and pressure surface, and is firmly pressed therebetween.

Each conveyor 35 can comprise a pressing device (not illustrated, itself known and therefore not described in detail), which is configured to push the upper branch of the lower flexible member 40 so as to keep it horizontal or substantially horizontal (i.e., preventing it from collapsing under the weight of the slab 15 or slabs 15).

Possibly, such a pressing device can also be configured to push the lower branch of the upper flexible member 45 closer to the resting surface 25.

For example, the squaring machine 10 can preferably also comprise a centring unit (not illustrated) configured to centre, with respect to a centring direction parallel to the flanking direction B, the slab 15 on the resting surface 25.

The centring unit can comprise, for example, a pair of banks, each of which has a contact surface (adapted to contact a respective side of the slab 15 of the opposite sides of the slab 15) parallel to the advancement direction A, each of which is slidingly associated with respect to a respective side bank 30 and can be actuated, e.g., by a preferably pneumatic actuator, towards and away from the resting surface 25.

The sides of the centring unit, moved towards the resting surface 25, are each adapted to contact by means of the respective contact surface a respective side of the opposite sides of the slab 15 (for example, each a respective first side or alternatively each a respective second side), so as to centre the slab 15 so that a vertical median plane of the resting surface 25 is at the same time a vertical median plane of the slab 15 (orthogonal to the major surfaces thereof) and said (first or second) opposite sides are arranged (substantially) parallel to the advancement direction A imposed by the resting surface 25. Such a centring unit, where present, can in particular be arranged at said inlet section of the movement unit, i.e., at said ends of the lower flexible members 40 of the conveyors 35 offset with respect to the respective upper flexible members 45.

The squaring machine 10 then comprises a pair of series of spindles 50, each series of which (comprises a plurality of spindles 50 and) is (carried, i.e., mounted, i.e.) fixed to a respective one of said side banks 30 and movable therewith along the flanking direction B.

Each series of spindles 50 comprises a plurality of spindles 50 aligned along an alignment direction parallel to the advancement direction A of the slabs 15.

Each spindle 50 comprises, first of all, a support frame 55, for example substantially cylindrical, internally hollow (i.e., provided with a cavity passing from one axial end to the other of the support frame 55).

The support frame 55 is rigid, i.e., non-deformable under torsion and/or flexion and/or compression when subjected to the usual loads for which it is envisaged.

The spindle 50 then comprises an actuation motor, supported by the support frame 55 (i.e., connected, e.g., indirectly, to the support frame 55 such as to be supported by the same) provided with a drive shaft rotating about a central rotation axis thereof.

The actuation motor is for example an electric motor provided with a stator and a rotor associated with the drive shaft and preferably coaxial therewith.

The drive shaft comprises a (rear) end and an opposite free (front) end, to which a tool-holder plate is rigidly fixed, directly or indirectly, to which an abrasive tool, for example an abrasive grindstone is fixed.

Each spindle 50 is therefore provided with an abrasive tool 60, i.e., said abrasive grindstone (e.g., of the disc or cup type), connected to the drive shaft and rotating (with the main drive shaft itself) about said central rotation axis.

For example, the abrasive grindstone of each spindle 50 is movable towards and away with respect to the resting surface 25, i.e., it is movable in translation along a translation path (straight and parallel, possibly coinciding, with the rotation axis R of the drive shaft) selectively approaching or moving away from the resting surface 25.

In detail, each spindle 50 comprises an actuator unit, itself known and therefore not described in detail, configured to translate the drive shaft along said translation direction and the abrasive tool 60 (i.e., said abrasive grindstone) therewith.

The actuation unit is therefore able to move (for a fine adjustment) the abrasive grindstone towards/away from the resting surface 25 and thus the slab 15 placed on the resting surface 25 itself.

During use, the abrasive grindstone of each spindle 50, i.e., the abrasive surface thereof, is adapted to be placed in a predetermined working position, wherein the abrasive surface of the abrasive grindstone is intended to come into contact with a first side (or alternatively a second side) of the slab 15 to be ground.

Furthermore, each series of spindles 50 comprises at least one spindle 50 facing a spindle 50 of the other series of spindles 50, for example with the central rotation axes of the drive shafts of the facing spindles 50 coaxial with each other.

For example, each spindle 50 of one series can be (facing and) aligned with a spindle 50 of the other series with respect to a direction parallel to the resting surface 25 and orthogonal to the advancement direction A.

Each series of spindles 50 comprises a plurality of spindles 50 arranged with the central rotation axis (of the drive shaft, and therefore of the abrasive grindstone) horizontal (or substantially horizontal, i.e., parallel to the resting surface 25) and orthogonal to the advancement direction A.

Each series of spindles 50 can further comprise at least one spindle 50, arranged with the main rotation axis R (of the drive shaft, and thus of the abrasive grindstone) lying on a plane which is inclined with respect to the resting surface 25 (i.e., inclined with respect to a horizontal plane) and in any case orthogonal to the advancement direction A (adapted to carry out what is known as a chamfering operation).

Each spindle 50 is rigidly fixed to a respective side bank 30, by means of the support frame 55, and further arranged so that the translation direction imposed by the adjustment unit on the drive shaft (and on the abrasive grindstone) is transverse, for example orthogonal, to the advancement direction A imposed on the slab(s) 15.

In particular, each spindle 50 of a series is fixed to the respective bank by means of the support frame 55 with the drive shaft protruding beyond the respective side bank 30 itself in the direction of the resting surface 25.

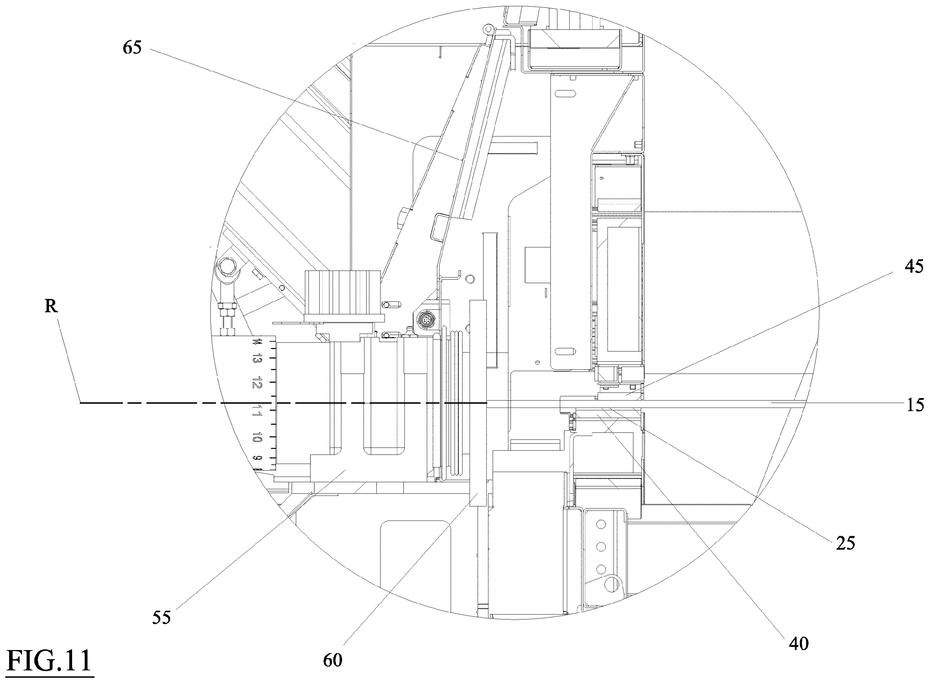

As can best be seen in the enlargement of Figure 11 and Figure 14, one or more protective barriers 65 are mounted on each side bank 30 to cover, the abrasive tool 60 (i.e., the abrasive grindstone) of one or more of the spindles 50 of the respective series.

Each protective barrier 65 is fixed (movable) to the respective side bank 30, so as to selectively occlude or free an access window (which can for example be made in the side bank 30 itself) which allows an operator to reach the abrasive tool 60 of the spindle 50 for the maintenance or replacement thereof.

For example, as better visible in Figure 14, each side bank 30 can comprise a lower part by means of which it is slidingly associated with the base frame 20, and which provides a fixing bench for the spindles 50 of the series, and an upper part which substantially defines a bridge structure above the spindles 50 (i.e., at a greater vertical height thereof) and which defines with the lower part said access windows allowing an operator to reach the abrasive tool of one or more spindles.

For example, each protective barrier 65 can be hinged to the respective side bank 30 (e.g., to said upper part thereof) so as to rotate, in particular with respect to a hinge axis preferably parallel to the advancement direction A and to the resting surface 25, between a closed position in which it occludes said access window and covers the abrasive tool 60 and an open position in which it frees said access window to allow the abrasive tool 60 to be reached.

Each protective barrier 65 is provided with a body comprising, firstly, a foil 70 (where foil can be understood as a body with reduced thickness, i.e., where the thickness is the smaller dimension) of rigid material, preferably metal, e.g., made of steel or aluminium. It is not excluded that, alternatively, said foil 70 could be made of a (possibly reinforced) rigid polymeric material, or of another material in any case suitable for the purpose.

Said foil 70 has two opposite major surfaces of which a first major surface facing the resting surface 25 (i.e., towards the other side bank 30, i.e., towards the abrasive tools of the spindles 50) and a second major surface facing the opposite side of the resting surface 25.

Said foil 70 is preferably flat and preferably continuous (i.e., without holes passing from one major surface to the other).

Said foil 70 can preferably have a thickness, understood as a dimension in the direction orthogonal to the major surfaces thereof, between 1 mm and 3 mm, e.g., substantially 2 mm.

The body of the protective barrier 65 then comprises a covering layer 75 made of sound-insulating (i.e., acoustically insulating, and optionally also sound-absorbing) material that covers, in direct contact or otherwise (i.e., directly or indirectly), the foil 70, for example in particular (partially or preferably entirely) at least the first major surface of the foil 70 (i.e., the major surface facing the resting surface 25).

The covering layer has two opposite major surfaces, one facing the foil and one turned towards, and at least partially facing, the abrasive tool of the spindle 50 and the resting surface 25.

Sound-insulating material can be understood, in particular, as a material with a density of at least 4kg/m³.

For example, said sound-insulating material of the protective barrier 65 can have a density greater than 20 kg/m³, e.g., preferably between 20 kg/m³ and 250 kg/m³, e.g., even more preferably between 20 kg/m³ and 85 kg/m³.

For example, said covering layer 75 can have a thickness, understood as development in the direction orthogonal to the first major surface of the foil 70, preferably between 20 mm and 40 mm, e.g., preferably between 25 mm and 35 mm, e.g., preferably substantially 30 mm.

Preferably said covering layer 75 can be made of (i.e., said sound-insulating material can be) polyurethane foam.

Alternatively, preferably, said covering layer 75 can be made of a sound-insulating material (i.e., said sound-insulating material can be) chosen from: synthetic fibre (i.e., a composite material) made from a polyester matrix and a polypropylene fibre reinforcement, polyester fibre, polyurethane foam resin, polymer foam (e.g., polyurethane or other). Further, the body of the protective divider can comprise a second covering layer 80 made of a yielding anti-vibration (and for example, optionally also sound-insulating) material which covers, in direct contact or otherwise (i.e., directly or indirectly), the foil 70, or at least the first major surface of the foil 70.

For example, said second covering layer 80 can be interposed between the covering layer 75 and the foil 70, i.e., interposed between the first major surface of the foil 70 and the covering layer 75 (in sound-insulating material).

The second covering layer 80 can then cover the foil 70 in direct contact, i.e., at least (e.g., only) said first major surface thereof.

Preferably, the second covering layer 80 is self-adhering to the foil 70, i.e., it does not require external adhesives to bond or otherwise fix to the foil 70.

Preferably, said second covering layer 80 can be made of (i.e., said yielding anti-vibration material can be) high-density polymeric material, for example in the (high-density polymeric) material commercially known as TECNODAMP.

Alternatively, said second covering layer 80 can be made of (i.e., said yielding anti-vibration material can be) tar.

For example, said second covering layer 80 can be made by coating the material with which it is made on the foil 70 (i.e., on at least said first major surface thereof).

Further, preferably said covering layer 80 can have a thickness, understood as development in the direction orthogonal to the first major surface of the foil 70, preferably between 1 mm and 10 mm, e.g., preferably between 2 and 8 mm, e.g., preferably substantially 5 mm.

Furthermore, the body of the protective barrier 65 can comprise a perforated sheet metal layer 85 covering the covering layer 75 (i.e., at least one surface thereof facing the resting surface).

Perforated sheet metal is understood to mean a sheet metal with a mesh or grid structure or alternatively a sheet metal provided with a plurality of through holes (in particular from a surface of the sheet metal facing the processing compartment to a surface of the sheet metal facing the covering layer, distributed, e.g., preferably uniformly, along the development of the sheet metal.

The covering layer 75 still remains partially facing the abrasive tools of the spindles by means of the passage openings provided by the holes in the perforated sheet metal. For example, said perforated sheet metal 85 can be made of steel or aluminium.

For example, said perforated sheet metal 85 can preferably have a thickness of between 0.5 mm and 3 mm, e.g., preferably substantially 1 mm.

Preferably, the foil 70 and the perforated sheet metal layer 85 can substantially a casing (or shell or cage, i.e., they can be fixed to each other, e.g., at a perimeter edge) inside of which said covering layer 75 (made of sound-insulating material) is contained and, where present, said second covering layer 80 (made of yielding anti-vibration, optionally also sound-insulating, material).

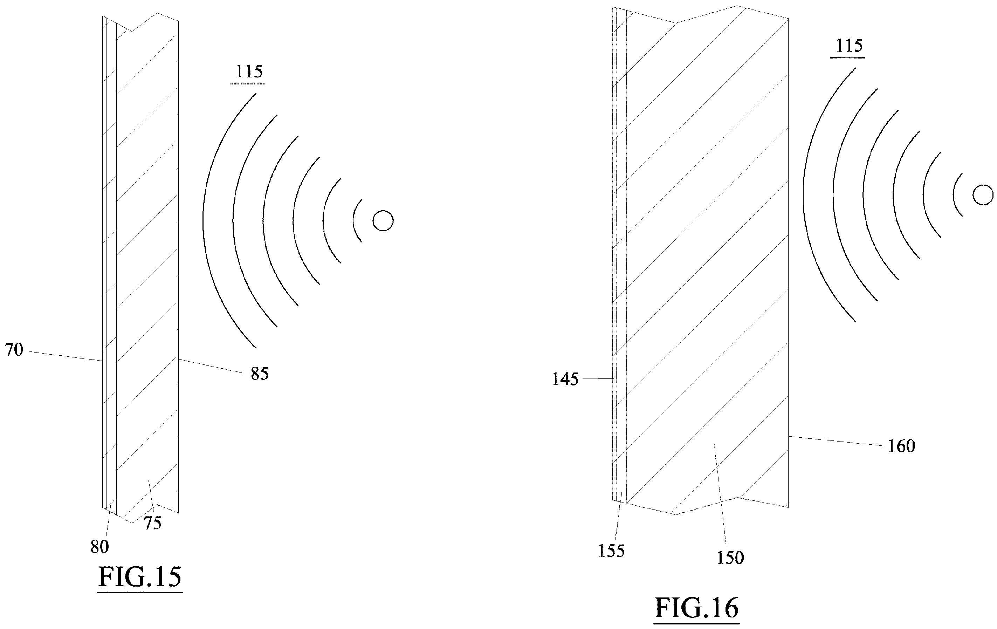

For example, as schematically illustrated in Figure 15 (where the concentric circumferential arcs schematically indicate the noise produced by the abrasive tool contact of the spindle/slab) the body of the protective barrier can have in sequence proceeding along a direction towards the resting surface 25 the foil 70, optionally said second covering layer 80 (in yielding, anti-vibration, preferably also sound-insulating material), said covering layer 75 (in sound-insulating, preferably also sound-absorbing material) and said perforated sheet metal layer 85.

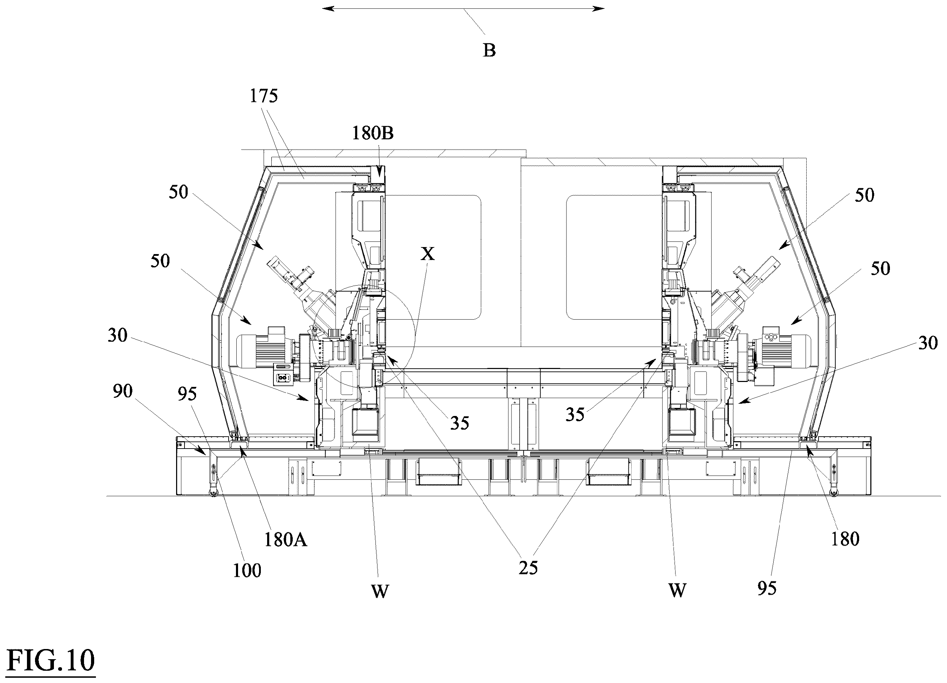

As can best be understood from Figure 10, the squaring machine 10 can comprise, possibly, at least one pair of platforms 90 each of which is arranged at a respective side bank 30 so as to be arranged at a respective side bank 30, so as to be arranged below one or more of said spindles 50 of a respective series of spindles 50 at a (non-zero) distance therefrom.

For example, it is possible to envisage that each platform 90 can be directly fixed to the base frame 20, or, alternatively, it is possible to envisage that each platform 90 can be fixed externally to a respective side bank 30 (i.e., on the opposite side with respect to the centre distance between the side banks 30, or fixed to a respective side bank 30 on the opposite side with respect to the resting surface 25) and movable therewith along the flanking direction B.

Each platform 90, as will better appear below, is adapted to provide a substantially horizontal walkable surface, placed at a greater vertical height than the ground for the squaring machine 10 to rest on, to facilitate the operator in reaching the spindles 50 mounted on the side bank 30.

Each platform 90 comprises a floor 95, rigid or non-deformable when subjected to the usual loads for which it is envisaged, and at least one pair of support legs 100 connected below the floor 95.

For example, each platform 90 can comprise three support legs 100 connected below to the floor 95, preferably homologous to one another, and also preferably placed equidistant from one another.

If the platforms 90 are movable with the respective side banks 30, each of the support legs 100 rests on the ground by means of a rolling body, preferably a wheel having at least one horizontal rotation axis R orthogonal to the flanking direction B (i.e., parallel to the advancement direction A).

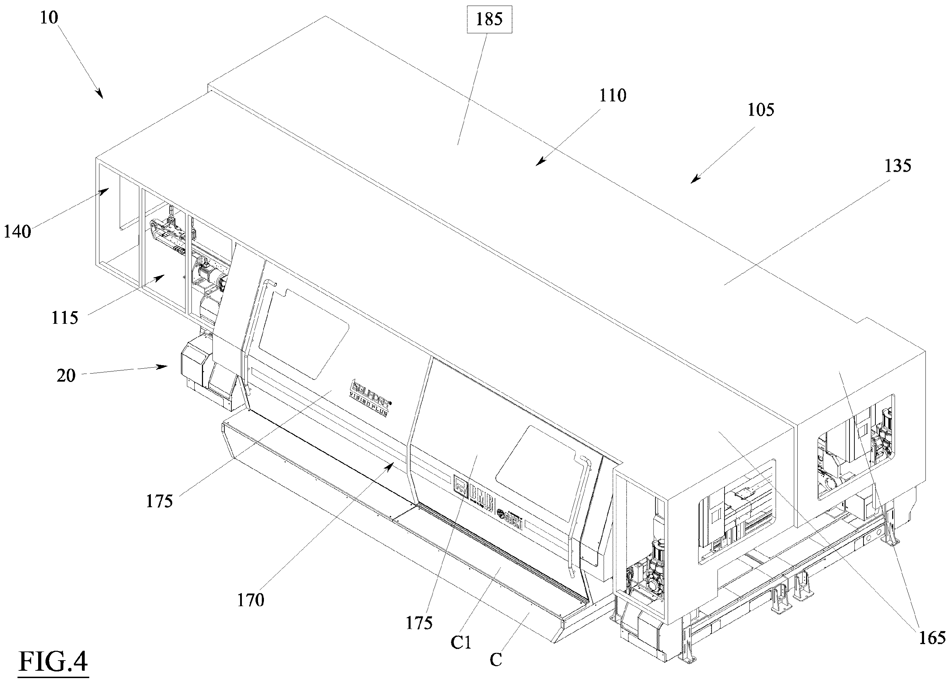

As for example better visible in Figures 4 6 and 7, the platforms 90 can possibly be peripherally surrounded by a casing C, preferably rigidly fixed to the base frame 20 of the squaring machine 10, which in turn can provide a substantially horizontal walking surface C1 placed at a greater vertical height than the ground supporting the squaring machine 10.

The squaring machine 10 further comprises a fairing 105 supported by the base frame 20.

Such a fairing 105, as will become clear below, is sound-insulating, i.e., it is capable of attenuating and/or absorbing the sound waves developing a contact of spindle 50 and slab 15 and/or limiting the transmission of noise produced by the contact of spindle 50 and slab 15.

Supported by the base frame 20 means that the fairing 105 is fixed directly or indirectly to the base frame 20 so that its weight is at least partially (e.g., even fully) supported by (i.e., bearing on) the base frame 20 of the squaring machine 10.

The fairing 105 delimits an (at least partially circumscribed) processing compartment 115, where (at least partially) at least some of said spindles 50 (and e.g., at least partially the respective side bank 30 carrying them) are accommodated, e.g., preferably at least all the spindles 50 of one series (i.e., at least a portion of each spindle of one series and at least partially the side bank 30 carrying them) or all the spindles 50 of both series of spindles 50 (i.e., at least a portion of each spindle of each series and at least partially each of the respective side banks 30).

Although the fairing 105 defines a processing compartment 115, this is obviously not completely closed but remains open at the resting surface 25 to allow the advancement of the slab 15 or sequence of slabs 15 (in the advancement sense) along the advancement direction A so that this can be intercepted one after the other by the spindles 50 (i.e., by the abrasive tools thereof).

It follows that each spindle 50 is at least partially exiting from the processing compartment 115, for example at least (preferably only) a portion of the abrasive tool 60 of the spindle 50 at the resting surface 25 (e.g., only a portion of the abrasive tool 60 arranged at the height of the gap between the lower flexible member 40 and the upper flexible member 45 of the conveyor 35 proximal thereto), to intercept the slab 15 advancing along the advancement direction A moved by the resting surface 25 itself.

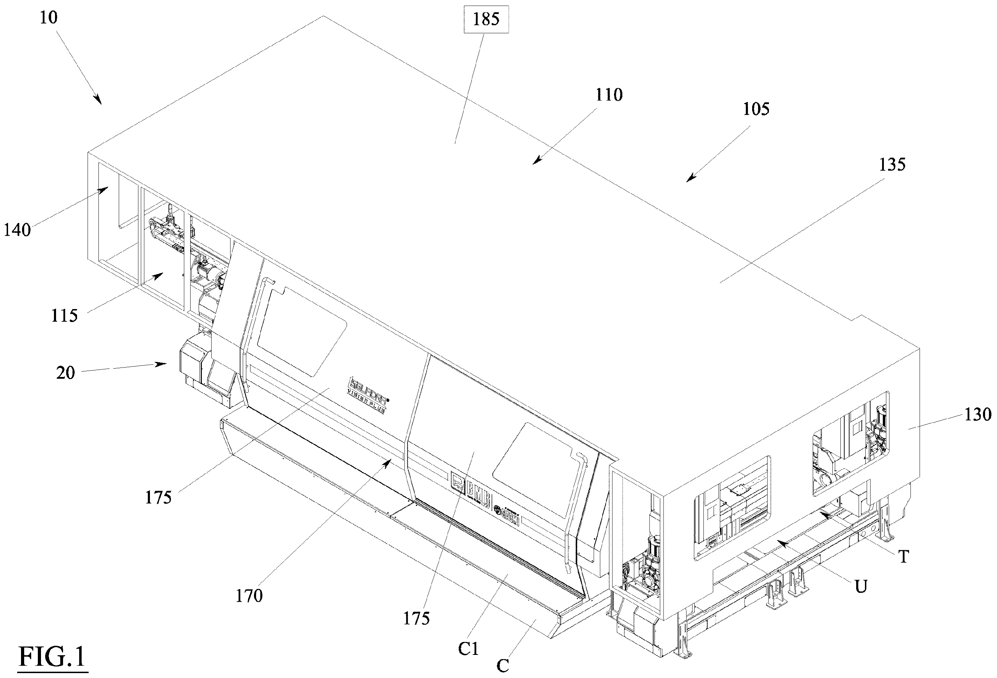

As for example illustrated in Figures 1 and 4, said sound-insulating fairing 105 can be made as a hood or cover or cap structure with the mouth of such a hood or cap or cover facing (and overlapping in plan view) the resting surface 25 at a non-zero distance therefrom.

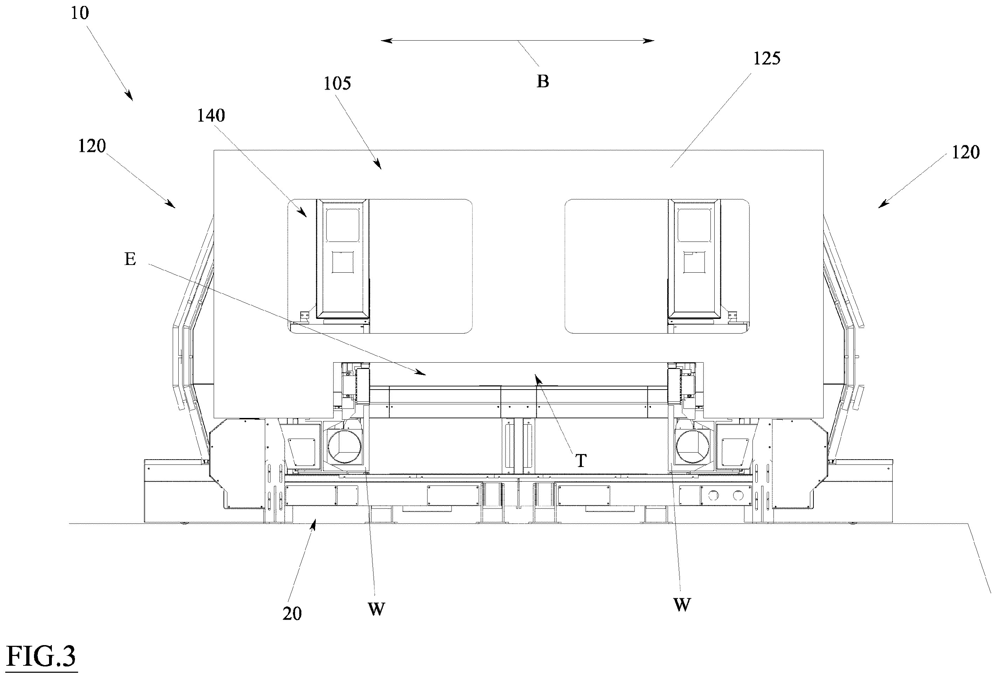

The fairing 105, in practice, at least partially surrounds the spindles 50 of a series, for example at least partially (i.e., at least a portion of) all the spindles 50 of at least one series or (at least a portion of) all the spindles 50 of both series, and at least partially the respective side bank 30 carrying them, for example at least partially both side banks 30. Between the fairing 105 and the resting surface 25, as illustrated for example in Figures 3 6 and 7, a continuous tunnel T remains defined along the advancement direction A along which the slabs 15 move (in advancement along the advancement direction A) from an inlet E of the tunnel T (upstream) for the slabs 15 to be processed to an outlet U of the tunnel T (downstream) for the slabs 15 which have been subjected to processing by the spindles 50.

For example, said tunnel T can have a width, understood as the development along the flanking direction B, equal to or at most slightly greater (e.g., a maximum of 5 cm greater) than the distance along the flanking direction B between the abrasive tools of the spindles of the series when the side banks are placed at the maximum reciprocal distance along said flanking direction B.

Such a fairing 105 comprises a body 110 having two opposite side walls 120 developing longitudinally along the advancement direction A and defining the sides of the fairing 105, optionally a front wall 125 and an opposite rear wall 130 (which are vertical or substantially vertical) connecting the side walls 120 each at respective longitudinal ends, and preferably also a roof wall 135 (horizontal or substantially) closing the processing compartment 115 defined by the sound-insulating fairing 105 at the top.

The front wall 125 can define with the resting surface 25 the inlet E of said tunnel T, while the rear wall 130 can define with the resting surface 25 the outlet U of said tunnel T.

As illustrated in Figures 1 and 4, it is possible to envisage that the side walls 120 of the fairing 105 can each be arranged outside a respective side bank 30 so that the side banks 30 are interposed between the side walls 120 of the fairing 105, with the roof wall 135 being superimposed in (plan view) on the side banks, the series of spindles 50 and the resting surface 25 (as well as the gap between the side banks 30).

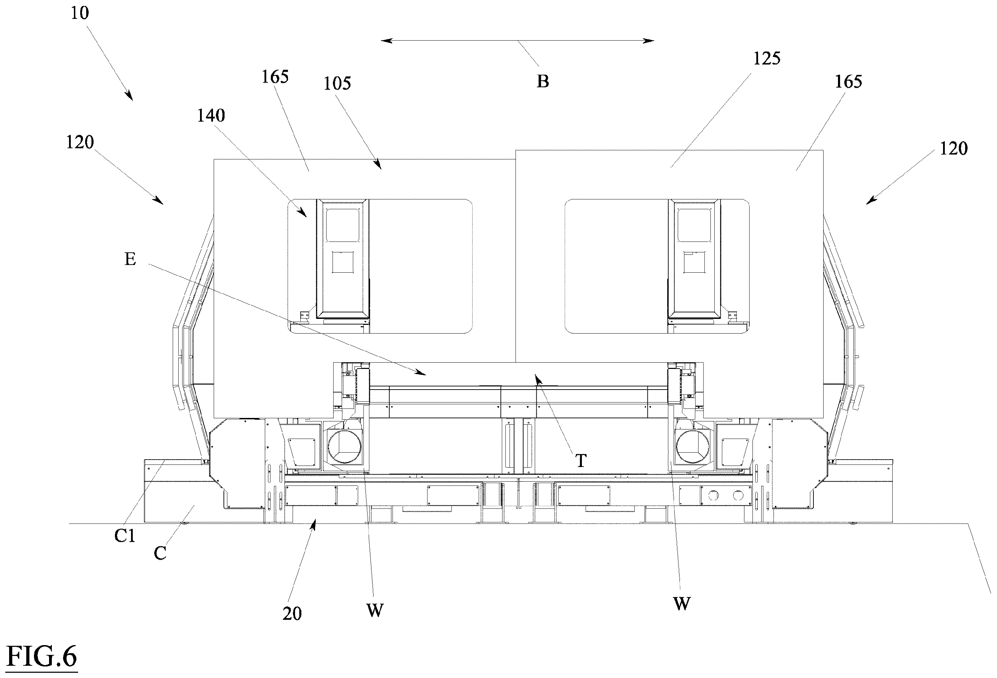

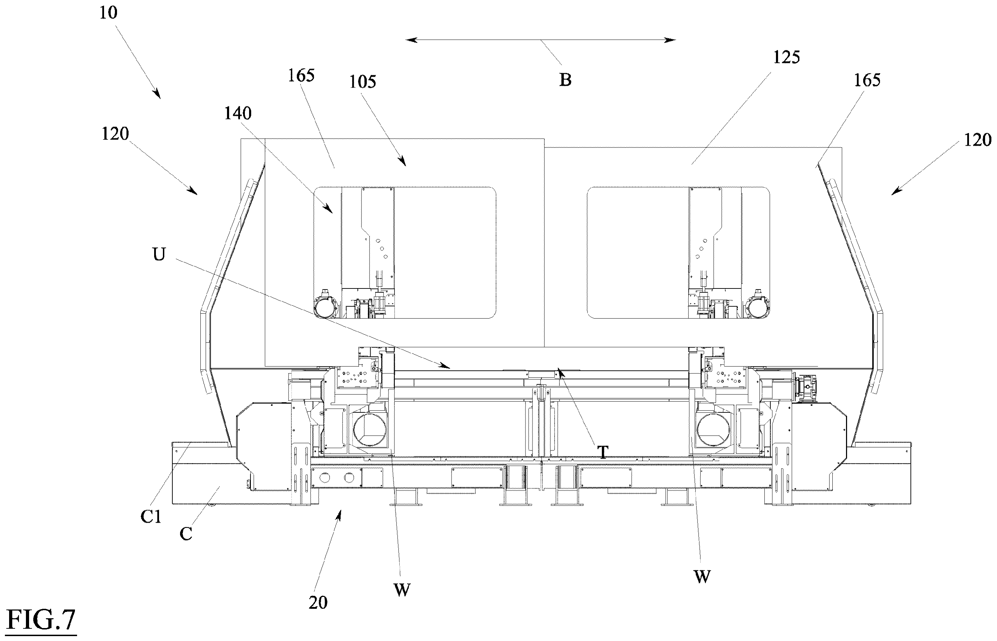

In other words, the fairing 105 can define a processing compartment 115 within which are contained (at least partially, and movable along the flanking direction B) both side banks 30 and both series of spindles 50 (i.e., a portion of each thereof) carried by the same (with at least a portion of each spindle 50, for example of the abrasive tool 60 thereof remaining however outside the processing compartment 115 to intercept the side of the slab 15). As best understood from Figures 3, 6, and 7, if the fairing 105 is adapted to cover both side banks 60 at the same time, the body 110 of the fairing 105 can further comprise a pair of bottom walls W each comprising a first section which surrounds a respective side bank 30 below at a (non-zero) distance.

Preferably, said bottom wall W can also comprise a second section, which develops vertically cantilevered from the first section, in particular from an end thereof proximal to a vertical median plane of the squaring machine parallel to the advancement direction A, and which preferably develops up to a vertical height slightly lower than that where the conveyor 30, or the respective lower flexible member, is located.

For example, each of said bottom walls W can develop from a lower end of a respective side wall 120 proximal to said side bank 30.

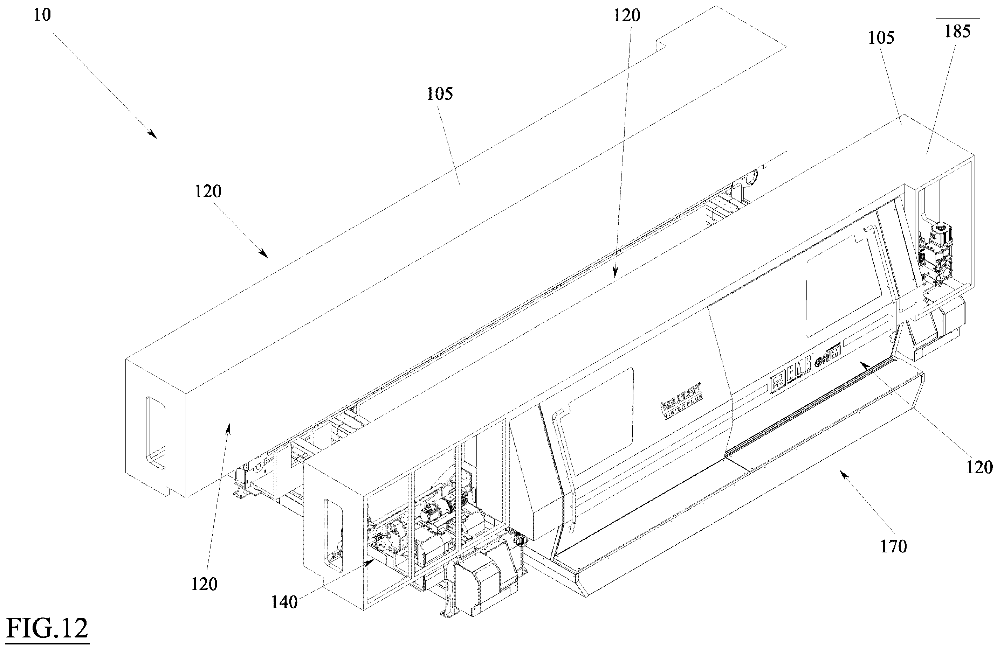

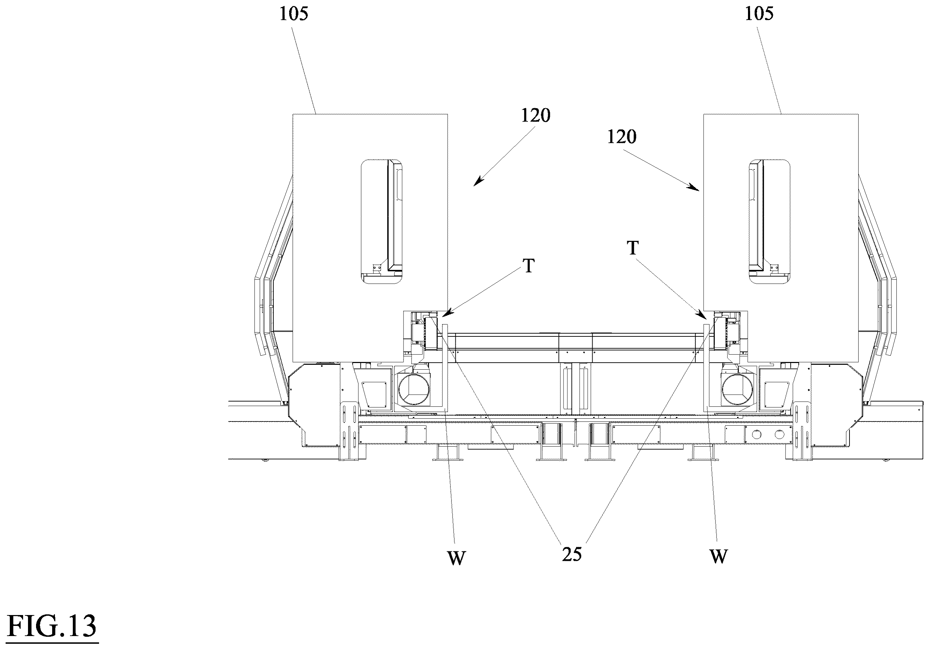

Alternatively, as illustrated, for example, in Figures 12 and 13, it is possible to envisage that the squaring machine 10 cam comprise a pair of distinct fairings 105 each of which is adapted to define a respective processing compartment 115 which accommodates (at least partially) a respective side bank 30 and the series of spindles 50 (or a portion of each thereof) carried by the same.

In such a case, the side walls 120 of each fairing 105 can each be arranged on one side of a respective side bank 30 so that said respective side bank 30 is interposed therebetween, and the top wall of the sound-insulating fairing 105 is superimposed on the respective side bank 30 and the respective series of spindles 50 carried by the same. Furthermore, in such a case, each of said fairings 105 can comprise a single bottom wall surrounding the respective side bank 30 below, as, for example, best seen in Figure 15. One or more windows 140 closed by optically transparent panels, preferably made of sound-insulating material (e.g., preferably in the manner widely known as double glazing, i.e., occluded by a double glass panel or a double Plexiglass panel), can be provided on the body of the fairing 105 (possibly of each fairing 105), as best illustrated in Figures 1 and 4, allowing an operator to observe the processing compartment 115 from outside the squaring machine 10.

In any case (i.e., in any of the embodiments), the body 110 of the fairing 105 can preferably have a thickness (understood as a dimension along a direction which goes from outside the processing compartment to inside the processing compartment substantially perpendicular to the body 110, i.e., to at least one wall thereof) of at least 5 cm, e.g., preferably at least 6 cm, even more preferably at least 8 cm.

For example, said body 110 of the fairing 105 can preferably have a thickness between 4 and 10 cm, e.g., preferably between 7 and 10 cm.

The body 110 (or booth body) of the fairing 105 (e.g., of each fairing 105 in the case of the squaring machine 10 comprising two fairings 105), as will be seen below, is stratiform, i.e., defined by a plurality of layers made of different materials and superimposed on one another.

The body 110 of the fairing 105 (in any of the embodiments illustrated and described) is at least partially made of a sound-insulating material.

Sound-insulating material can be understood, in particular, as a material with a density of at least 4kg/m³.

For example, said sound-insulating material of the fairing 105 can have a density greater than 19 kg/m³, e.g., preferably between 20 kg/m³ and 250 kg/m³ (extremes included), even more preferably between 20 kg/m³ and 85 kg/m³ (extremes included).

Said sound-insulating material, as will become clear below, is at least partially facing the processing compartment.

In particular, the body of the fairing 105 firstly comprises a rigid (i.e., not deformable when subjected to the usual loads for which it is intended) support structure 145, e.g., metal, preferably made of aluminium or steel.

It is not excluded, however, that said support structure 145 of the sound-insulating fairing 105 can be made of a rigid polymeric material (possibly reinforced) or of another material in any case suitable for the purpose of providing a rigid structure to the sound-insulating fairing 105.

Such a support structure 145, for example, can substantially define a substantially box-like shell (for example substantially said support structure can define a rigid shell of the fairing 105).

In any case, the support structure 145 (e.g., said shell) has a surface facing the processing compartment 115 defined by the (sound-insulating) fairing 105, and an opposite surface facing the outside of the sound-insulating fairing 105.

The body of the fairing 105 further comprises a coating layer 150 which covers (at least partially), in direct contact or otherwise, the support structure 145, (preferably inside the processing compartment 115 or which covers) e.g., (partially or at least a main portion or entirely, in direct contact or otherwise) said surface of said support structure 145 facing the processing compartment 115.

Said coating layer 150 is made of said sound-insulating (i.e., acoustic insulation, possibly also sound-absorbing) material.

Said coating layer can, therefore, have a density greater than 19 kg/m³, e.g., preferably between 20 kg/m³ and 250 kg/m³ (extremes included), even more preferably between 20 kg/m³ and 85 kg/m³ (extremes included).

For example, said coating layer 150 can be made of (i.e., said sound-insulating material, i.e., acoustic insulation, can be) polyurethane foam.

For example, preferably, said coating layer 150 can be made of a sound-insulating material (i.e., said sound-insulating material can be) chosen from: polyurethane foam, synthetic fibre (i.e., a composite material) made from a polyester matrix and a polypropylene fibre reinforcement, polyester fibre, polyurethane foam resin, polymer foam (e.g., polyurethane or other).

Furthermore, said coating layer 150 can preferably have a thickness between 60 and 120 mm, e.g., preferably between 70 mm and 90 mm.

The coating layer 150 is superimposed on the support structure 145 (preferably on said surface of the support structure facing the processing compartment), e.g., in direct contact or otherwise, and can be fixed thereto (directly or indirectly) or it can simply be resting in place.

Said coating layer 150 therefore has a (major) surface facing the support structure (i.e., said surface thereof facing the processing compartment) and an opposite (major) surface facing and at least partially turned towards the processing compartment.

The body of the sound-insulating fairing 105 can further comprise at least one further coating layer 155 made of a yielding (i.e., at least partially elastically deformable) anti-vibration (i.e., vibration-damping, possibly also sound-insulating) material covering the support structure 145, preferably inside the processing compartment 115 or preferably covering said surface of the support structure 145 facing the processing compartment. For example, said further coating layer 155 may be made of (i.e., said yielding anti-vibration material can be) high-density polymeric material, e.g., in the material known by the trade name TECNODAMP, or alternatively laminated to other densities comprising a mixture of oxidised bitumen, plasticisers, elastomers and optionally fillers of variable particle size.

Furthermore, said further coating layer 155 can preferably have a thickness between 1 and 10 mm, e.g., preferably between 3 mm and 8 mm.

Preferably, as can best be seen from the diagram of Fig. 16, the further coating layer 155 can be interposed between the support structure 145 and the coating layer 150 (made of sound-insulating material).

For example, the further coating layer 155 can be placed in direct contact on the support structure 145 (i.e., on said surface thereof facing the processing compartment 115).

In other words, such a further coating layer can have a surface facing outside the processing compartment which covers, preferably in direct contact, the surface of the support structure facing the processing compartment.

The further coating layer 155 can then have a surface facing the processing compartment which faces, e.g., in direct contact, a surface of the coating layer 150 facing the outside of the processing compartment (i.e., facing the support structure).

Preferably, the further covering layer 75 is self-adhering to the support structure 145, i.e., self-gripping, i.e., it does not require external adhesives to bond or otherwise fix to the support structure 145 of the sound-insulating fairing 105.

For example, said further coating layer 155 can be made by coating the material with which it is made on the support structure 145 (i.e., on at least said surface thereof facing the processing compartment 115).

Further, the body 110 of the sound-insulating fairing 105 can further comprise a layer of perforated sheet metal 160 superimposed on the coating layer 150 (i.e., on the layer of sound-insulating material), i.e., said perforated sheet metal layer is superimposed on a surface of the coating layer 150 facing the processing compartment and facing the same by means of the holes of the sheet metal).

Perforated sheet metal is understood to mean a sheet metal with a mesh or grid structure or alternatively a sheet metal provided with a plurality of through holes (in particular from a surface of the sheet metal facing the processing compartment to a surface of the sheet metal facing the coating layer 150, distributed, e.g., preferably uniformly, along the development of the sheet metal.

In any case, said sheet metal layer has a plurality of openings which allow said surface of the coating layer (of sound-insulating material) facing the processing compartment to face the same.

Preferably, the support structure 145 and the perforated sheet metal layer 160 can substantially define a casing or shell (i.e., they can be fixed to each other, for example at a peripheral edge, so as to define said casing or shell delimiting an accommodation compartment) within which said coating layer 150 is contained and, if present, said further coating layer 155 (made of yielding anti-vibration material).

The coating layer 150 (i.e., the layer of sound-insulating material) can then be arranged (e.g., simply rested on) covering the support structure 145 (i.e., the surface thereof facing the processing compartment 115), possibly with the further coating layer 150 interposed, and be held in place by the perforated sheet metal layer 160.

For example, as schematically illustrated in Figure 16 (where the concentric circular arcs schematically indicate the noise produced by the abrasive tool-slab contact), the body 110 of the fairing can have in sequence from the outside of the processing compartment 115 towards the inside of the processing compartment the support structure 145, optionally said further coating layer 155 (made of a yielding, anti-vibration, preferably also sound-insulating material), said coating layer 150 (made of sound-insulating, possibly also sound-absorbing material) and said perforated sheet metal layer 160.

As mentioned above, the sound-insulating fairing 105 is supported by the base frame 20 of the squaring machine 10.

For example, it can be envisaged that said sound-insulating fairing 105 can be rigidly fixed directly to the base frame 20, e.g., the body 110 of the sound-insulating fairing 105 (by means of the support structure 145) can be welded, screwed or otherwise fixed directly to the base frame 20 of the squaring machine 10.

The body 110 of the sound-insulating fairing 105 can be made of (i.e., comprise) two half-shells 165, which make the body 110 of the sound-insulating fairing 105 available (at least partially or entirely).

In such a case, each half-shell 165 provides a respective side wall 120, a respective section of the front wall, a respective section of the rear wall 130 and a respective section of the roof wall 135.

Each of said half-shells 165 of the body 110 of the sound-insulating fairing 105 can then be fixed, e.g., directly fixed, to the base frame 20 of the squaring machine 10 so as to be supported by the same.

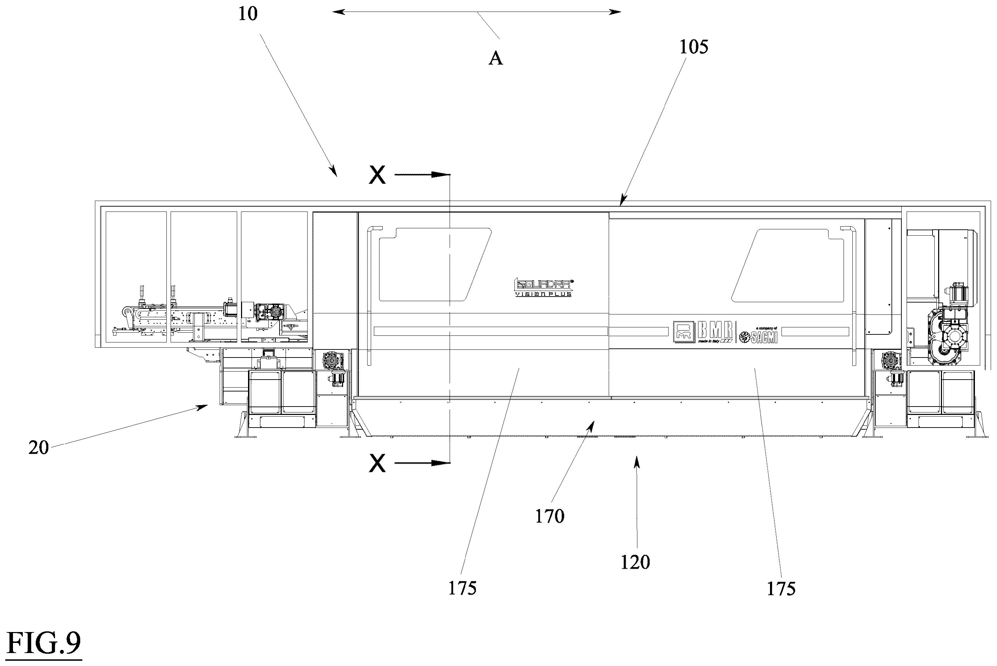

Alternatively, as in the case illustrated in Figures 4-10, it is possible to envisage that each of said half-shells 165 can be fixed to a respective side bank 30 and integral in movement therewith along the flanking direction B.

In such a case, therefore, the sound-insulating fairing 105 is fixed to the side banks 30 and supported by the base frame 20 by means of the same.

The two half-shells 165 of the body 110 of the sound-insulating fairing 105 (in any case, i.e., whether they are fixed directly to the base frame 20 or whether they are each fixed to a respective side bank 30) can have substantially homologous shape.

Preferably, however, the two half-shells 165 can have slightly different dimensions.

In particular, one of the two half-shells 165 may be smaller than the other so that it is at least partially inserted, with reduced clearance (i.e., so that a small gap of e.g., a maximum of 3 cm, possibly closed by gaskets, remains defined between the respective sections of the front wall and the rear wall 130), inside the other half-shell 165.

Thereby, if each half-shell 165 is fixed to a respective side bank 30, when the side banks 30 move along the flanking direction B, one half-shell 165 (the smaller one) can slide along said advancement direction A inserted with reduced clearance within the other half-shell 165, for example preferably remaining in each position of the side banks 30 with respect to the flanking direction B partially inserted (with reduced clearance) within the other half-shell 165.

If the squaring machine comprises two fairings, as illustrated for example in Figures 12 and 13, it is possible to envisage that each of said fairings 105 can be fixed to a respective side bank 30 and integral in movement therewith along the flanking direction B.

In such a case, therefore, each sound-insulating fairing 105 is supported by the base frame 20 by means of the respective side bank.

As more clearly visible in the accompanying figures, the sound-insulating fairing 105 can comprise a door system 170 associated with an access opening to the processing compartment 115 (lying on a plane parallel to the advancement direction A A) made in the body 110 of the sound-insulating fairing 105 itself, said door system 170 being selectively operable in an open configuration in which it frees the access opening or in a closed configuration in which it occludes the access opening.

For example, said door system 170 can comprise a pair of doors 175 which can reciprocally slide towards/away from each other, manually or automatically operated, e.g., sliding along a sliding direction parallel to the advancement direction A.

For example, one of said doors 175 can be fixed along said sliding direction while the other is movable, or both doors can be sliding along said sliding direction.

Each of said doors 175 provides a respective portion of the body 110 of the sound-insulating fairing 105 and can therefore have the stratiform structure described above.

For example, as illustrated in Figure 10, it is possible to envisage that, if the squaring machine 10 comprises said platforms 90, at least one door 175 of the door system 170 (possibly both doors) can have a plurality of rollers rotatably associated thereto below, which are supported and slide within a guide 180A with longitudinally parallel development to the sliding direction of the door 175, and that said guide 180A can be arranged at the platform 95 (above the same) of a respective one of said platforms 90. Furthermore, alternatively or possibly in addition, if the body 110 of the fairing 105 comprises two half-shells, it is possible to envisage that at least one door 175 of said door system 170, for example each door 175, can have a plurality of rollers rotatably associated therewith at the top of the door 175 which are supported and slide within a guide 180B developing longitudinally parallel to the sliding direction of the door 175, and that said guide 180B can be fixed to a respective side bank 30 above the same.

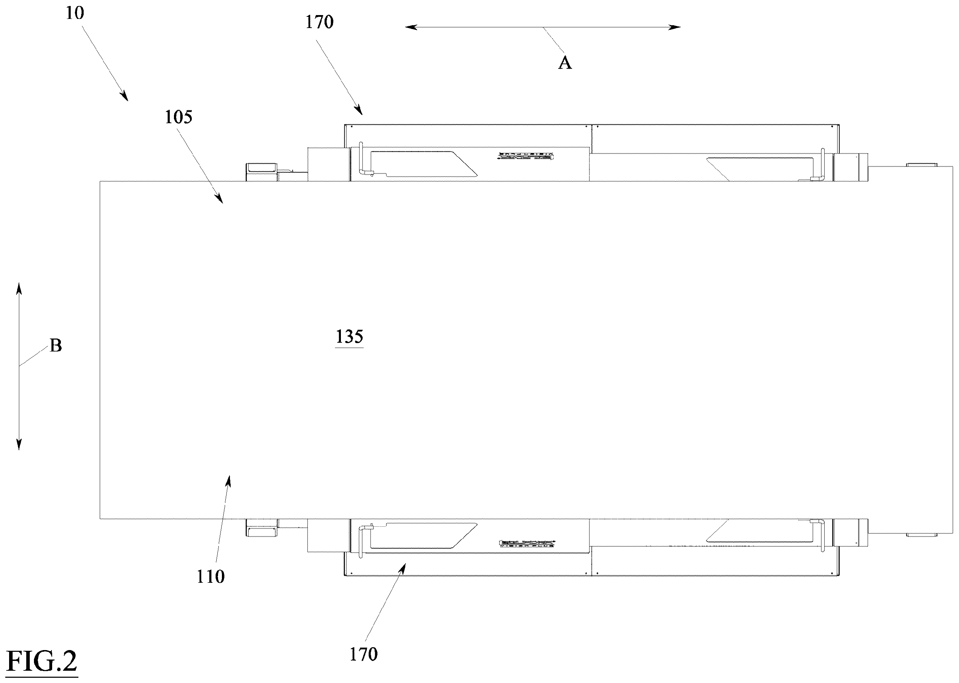

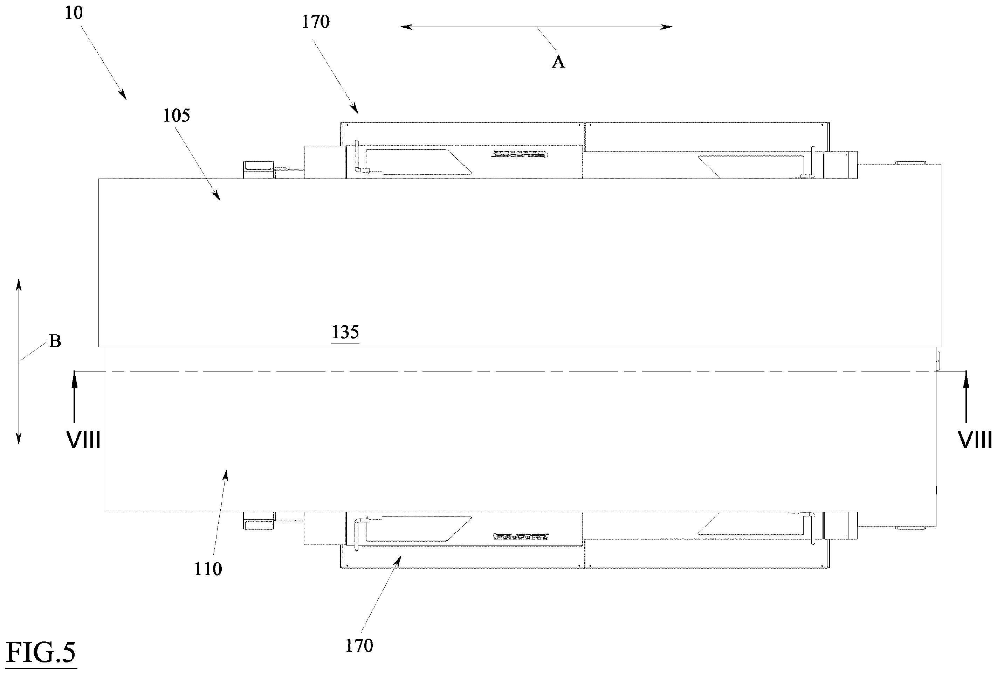

For example, as better illustrated in Figures 2 and 5, the sound-insulating fairing 105 can comprise a pair of door systems, each of which is made at a respective side bank of the sound-insulating fairing 105.

The squaring machine 10 can also comprise an electronic control unit 185 (only schematically illustrated), provided with a memory unit, and which can be operatively connected to a user interface of the squaring machine 10 by means of which the electronic control unit 185 can emit one or more signals, for example of the visible and/or sound type, perceptible by a user or possibly receive one or more inputs.

For example, the user interface could be defined by a PC with monitor and, for example, be fixed to the base frame 20 of the squaring machine 10 or alternatively positioned remotely or still be of the type of a movable device.

The electronic control unit 185 can be configured for the management and control of the operation of the squaring machine 10.

In particular, the electronic control unit 185 can be operatively connected to the actuation motor (of each spindle 50) to control the activation and deactivation thereof, thereby activating and deactivating the rotation of the relative abrasive tool 60, i.e., the relative abrasive grindstone, about the rotation axis R.

The electronic control unit 185 Y can also be operatively connected to the adjusting unit (of each spindle 50) to command the activation and deactivation thereof so as to selectively adjust the position of the abrasive grindstone along the translation direction. Further, the electronic control unit 185 can be operatively connected to the translation movement of the side banks 30 to command the activation and deactivation thereof so as to adjust the reciprocal position of the side banks 30 along the flanking direction B. The electronic control unit 185 can also be operatively connected to the door system 170 to detect the configuration thereof, i.e., to detect (e.g., by means of a sensor, e.g., of the proximity sensor type or other type of sensor otherwise suitable for the purpose) if the door system 170 is in the closed configuration or in the open configuration.

The electronic control unit 185 can then be configured to terminate the actuation of the spindles 50 of the series and/or generate an alarm signal if (i.e., when) the door system 170 switches from the closed configuration to the open configuration.

The invention thus conceived is susceptible to many modifications and variants, all falling within the same inventive concept.

Moreover, all details can be replaced by other technically equivalent elements.

In practice, the materials used, as well as the contingent shapes and sizes, can be whatever according to the requirements without for this reason departing from the scope of protection of the following claims.

## Claims

1. A squaring machine (10) for processing slabs (15), comprising:
- a base frame (20);
- a pair of side banks (30) supported by said base frame (20) and movable in reciprocal approach/distancing along a horizontal reciprocal flanking direction (B), wherein each side bank (30) carries:
∘ a series of spindles (50) each having an abrasive tool (60) rotating about a respective rotation axis (R); and
∘ at least one conveyor (35),
wherein said conveyors (35) carried by the side banks (30) provide a movable support surface (25) adapted to receive and move at least one slab (15) or a succession of slabs (15) along a horizontal advancement direction (A) orthogonal to the flanking direction (B);
- a fairing (105) supported by the base frame (20) and delimiting a processing compartment (115) where at least some of said spindles (50) are accommodated.

2. The squaring machine according to the preceding claim, wherein said fairing (105) has a body of a thickness of at least 4 cm.

3. The squaring machine according to claim 1, wherein said fairing (105) is provided with a body (110) at least partially made of a sound-insulating material.

4. The squaring machine 10 according to claim 3, wherein the body (110) of the fairing (105) comprises:
- a support structure (145),
- at least one coating layer (150) made of sound-insulating material covering the support structure (145).

5. The squaring machine (10) according to claim 4, wherein the body (110) of the fairing (105) further comprises a further coating layer (155) made of a yielding anti-vibration material covering the support structure (145).

6. The squaring machine (10) according to claim 4 or 5, wherein the body (110) of the fairing (105) further comprises a perforated sheet metal layer (160) superimposed on the coating layer (150).

7. The squaring machine (10) according to claim 5, wherein the further coating layer (155) is interposed between the support structure (145) and the coating layer (150).

8. The squaring machine (10) according to claim 3 or 4, wherein said sound-insulating material is polyurethane foam.

9. The squaring machine (10) according to claim 3 or 4, wherein said sound-insulating material has a density comprised between 20 kg/m³ and 85 kg/m³.

10. The squaring machine (10) according to claim 1, wherein the fairing (105) comprises a door system (170) associated with an access opening to the processing compartment (115) made in a body (110) of the fairing (105) itself, said door system (170) being selectively operable in an open configuration in which it frees the access opening or in a closed configuration in which it occludes the access opening.

11. The squaring machine (10) according to claim 1, wherein said door system (170) comprises a pair of doors (175) which can reciprocally slide towards/away from each other.

12. The squaring machine (10) according to claim 1, wherein the fairing (105) is rigidly fixed to the base frame (20).

13. The squaring machine (10) according to claim 1, wherein the body (110) of the fairing (105) comprises a pair of half-shells (165) adapted to delimit said processing compartment (115), each half-shell (165) being fixed to a respective side bank (30) and integral in movement therewith.

14. The squaring machine (10) according to claim 1, comprising a pair of fairings (105) each of which defines a respective processing compartment (115) within which the spindles (50) of a respective series of spindles (50) are accommodated.

15. The squaring machine (10) according to claim 10, comprising an electronic control unit (185) operatively connected to the spindles (50) of the series to selectively actuate the same in rotation about the respective rotation axes and operatively connected to the door system (170), the electronic control unit (185) being configured to terminate the actuation of the spindles (50) of the series and/or generate an alarm signal if the door system (170) passes from the closed configuration to the open configuration.

16. The squaring machine (10) according to claim 1, wherein one or more protective barriers (65) are mounted on each side bank (30) to cover the abrasive tool (60) of one or more of the spindles (50) of the respective series, said protective barrier (65) being provided with a body comprising:
- a foil (70) of rigid material, and
- a covering layer (75) made of sound-insulating material covering the foil (70) of rigid material.
